# EUROPEAN PATENT APPLICATION

(11) **EP 2 208 656 A1**
(43) Date of publication of application: **21.07.2010**
(21) Application number: 10150859.6
(22) Date of filing: 15.01.2010
(51) Int. Cl.: B62B 1/10, B62B 1/14

(54) **Trolley-mounted motor-driven unit**

(30) Priority: 15.01.2009 IT BO20090013
(71) Applicant: Galassi, Doriano, 48025 Borgo Rivoloa -Riolo Terme (IT)
(72) Inventor: Galassi, Doriano, 48025 Borgo Rivoloa -Riolo Terme (IT)
(74) Representative: Lanzoni, Luciano

(57) **Abstract**

A trolley-mounted motor-driven unit comprises a manually driven trolley (2) with two wheels (3) and a spray painting device (4) which is integral with the trolley (2), equipped with a pump (18) and a motor (22), the trolley comprising a frame (5) forming a cantilevered supporting seat (9) for the device (4); the seat (9) being part of a U-shaped structure (27) comprising elastic damper means (28), for absorbing the vibrations generated by the motor (22) and by the pump (18) during operation of the spray painting device. [Figure 1]

## Description

This invention relates to a trolley-mounted motor-driven unit.

More precisely, this invention relates to a unit comprising a device which is driven by a motor and is mounted on a trolley.

In this description, without limiting the scope of the invention, particular reference is made to a unit relative to an airless spray painting device. Such devices, equipped with a high pressure pump and a motor, are mounted on a manually driven trolley.

The trolley, which is an integral part of the above-mentioned unit, comprises a frame having an extended shape, the bottom of which is equipped, at an intermediate position, with two wheels. Relative to the pair of wheels, the trolley comprises on one side a device supporting shelf, and on the opposite side two arms fitted with handgrips for driving the trolley.

At the free end the bottom of the above-mentioned shelf is equipped with two supporting feet which act together with the wheels when the trolley is stopped and the spray painting device is in its operating conditions.

As is known, the airless spray painting device comprises a pump formed by a hollow body which substantially has the shape of a parallelepiped, and which at a circular opening in one of its walls is fixed to an electric motor.

On one wall of the hollow body, on the opposite side to the electric motor, the pump is connected through an opening and a suction pipe to a container which holds the paint, the container also being supported by the trolley.

Also according to the prior art, when the device is operating both the motor and the pump, comprising a diaphragm moved with reciprocating motion by a hydraulic circuit, generate vibrations.

Said vibrations are transmitted to the trolley, integral with the device, causing the trolley to perform uncontrollable and unpredictable movements during use of the painting device.

This invention has for an aim to provide a unit which is free of the disadvantages described above with reference to the prior art.

Accordingly this invention provides a trolley-mounted motor-driven unit with the characteristics described in one or more of the appended claims.

This invention is described below with reference to the accompanying drawings, which illustrate a nonlimiting embodiment, and in which:

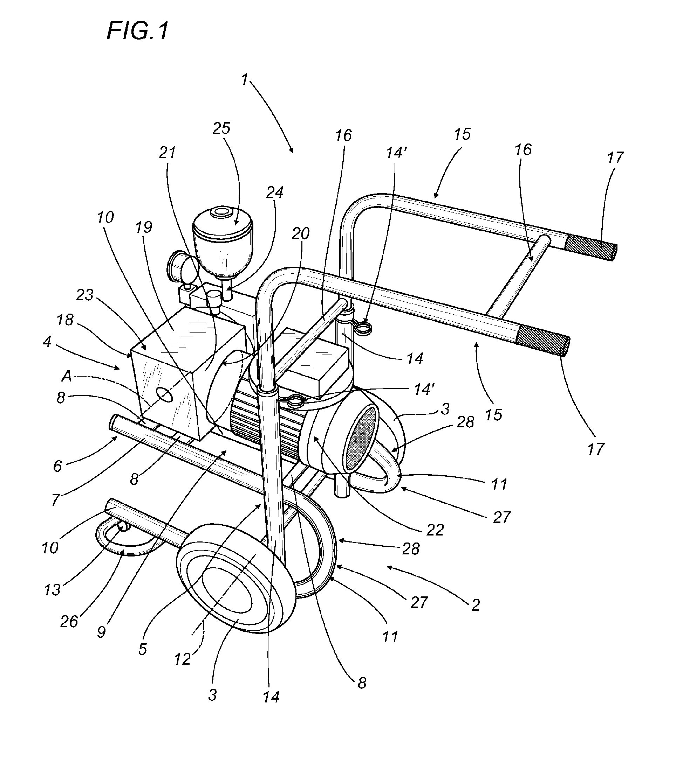

- Figure 1 is a perspective view of the unit made according to this invention;
- Figure 2 is a side view of the unit of Figure 1. With reference to Figures 1 and 2, the numeral 1 denotes as a whole a trolley-mounted motor-driven unit and in particular a unit relative to an airless spray painting device.

The unit comprises a manually driven trolley 2 equipped with two wheels 3 and a spray painting device 4 which is integral with the trolley 2.

The trolley 2 comprises a frame 5, comprising two U-shaped tubular elements 6, side by side, lying in planes which converge from the bottom upwards and positioned symmetrically relative to an intermediate plane between the wheels 3.

The upper arms 7 of the tubular elements 6 are connected to each other by metal slats 8 forming a cantilevered supporting seat or shelf 9 on which the device 4 is fixed.

The lower arms 10 are connected to each other, close to the curved stretches, labelled 11, connecting them to the upper arms 7, by a transversal axle 12. The two wheels 3 are mounted at the ends of the axle.

Mounted at the free ends of the lower arms 10 and transversal to them there are respective trolley 2 supporting feet 13.

The numeral 14 denotes two tubular uprights, parallel with each other, respectively fixed to the arm 7 and to the arm 10, at the opposite ends of the axle 12.

Inserted in the upper ends of the two uprights 14 and fixed to them by removable locking means 14a, there are two L-shaped elements 15, connected to each other by two bars 16.

The free ends of the two L-shaped elements 15, projecting on the opposite side to the arms 7 and 10, form two handgrips 17 for manually driving the trolley 2.

As is known, the airless spray painting device 4 comprises a pump 18 formed by a hollow body 19 which is substantially in the shape of an elongate parallelepiped extending along an axis A.

Fixed to the hollow body 19 at a circular opening 20 in one of its lateral walls 21 parallel with the axis A there is, positioned transversally to the axis A, an electric motor 22 which substantially has a cylindrical shape.

The painting device 4 is fixed on the shelf 9 in such a way that the axis A is parallel with the axle 12 of the wheels 3, and the pump 18 is facing towards the tubular uprights 14.

Through an upper wall 23 of the hollow body 19, the pump 18 is connected by a suction pipe 24 to a container 25 which holds the paint, the container also being supported by the trolley 2.

A U-shaped handle 26 is fixed close to the free end of each lower arm 10, and the respective foot 13. The two handles 26 are designed to facilitate the work of the operator if the unit 1 must, for example, be placed on or picked up from a vehicle surface.

For that purpose, the curved stretches 11 may also be useful as grip elements.

In practice, the cantilevered seat 9, formed by the upper arms 7 and the slats 8 in direct contact with the painting device 4, is subjected to vibrations caused both by the electric motor 22 and the pump 18.

The U-shaped tubular elements 6, forming the seat 9, form a metal single-piece structure 27 comprising elastic type damper means 28, consisting of the curved stretches 11.

The damper means 28 are designed to absorb the above-mentioned vibrations, and therefore to prevent their transmission to the lower arms 10, that is to say, to the part of the frame 5 in direct contact with the ground.

In other words, the above-mentioned damper means form elastic elements for absorbing and damping the vibrations.

That eliminates the causes of uncontrollable and unpredictable movements which occur in the prior art during use of the painting device 4.

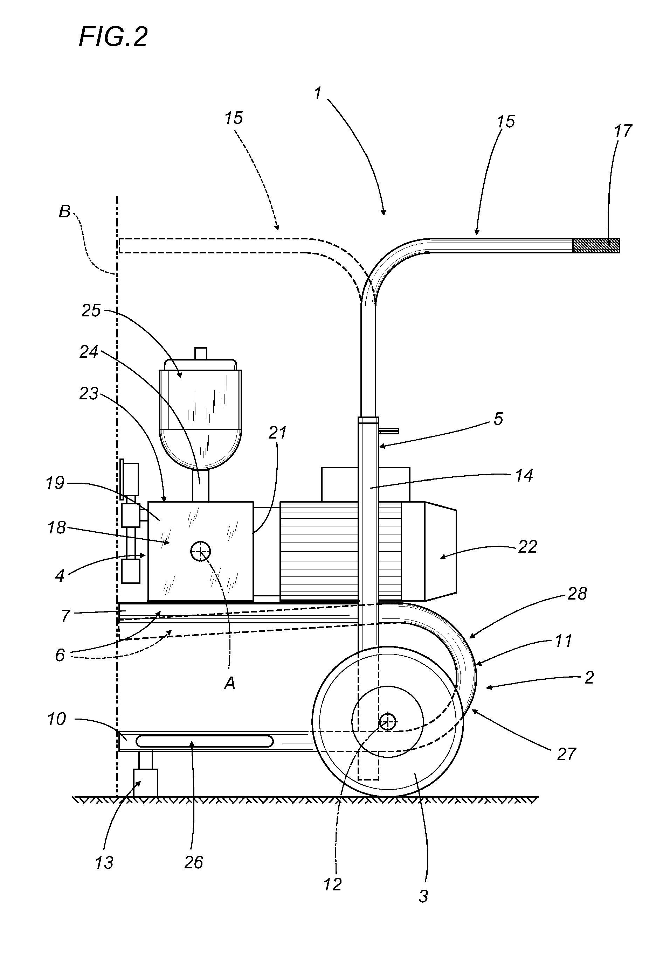

To facilitate transportation of the trolley-mounted motor-driven unit 1, its size can be reduced very simply, by fitting the L-shaped elements 15 connected to the bars 16 in a second position, as illustrated with a dashed line in Figure 2, that is to say, rotated through 180° relative to the normal position for use.

Finally, it should be noticed that the seat 9 is sized so that the painting device 4 does not extend beyond the free ends of the upper arms 7 and of the elements 15 in their second position (see line B in Figure 2).

In that way, the trolley-mounted motor-driven unit 1 has a minimum dimensions configuration which is particularly suited to its transportation on a vehicle.

The invention described above is susceptible of industrial application and may be modified and adapted in several ways without thereby departing from the scope of the inventive concept. Moreover, all details of the invention may be substituted by technically equivalent elements.

## Claims

1. A trolley-mounted motor-driven unit comprising a device (4), equipped with a motor (22) and a trolley (2) having a frame (5) forming a supporting seat (9) for the device (4), **characterised in that** the frame (5) comprises damper means (28) connected to the supporting seat (9).

2. The trolley-mounted motor-driven unit according to claim 1, **characterised in that** the supporting seat (9) is formed by a cantilever end of the frame (5).

3. The trolley-mounted motor-driven unit according to claim 2, **characterised in that** the frame (5) comprises a U-shaped structure (27), its top forming the cantilever supporting seat (9) and its curved intermediate portion forming the damping means (28).

4. The trolley-mounted motor-driven unit according to claim 3, **characterised in that** the U-shaped structure is formed by at least two tubular elements (6) positioned side by side and bent into a U-shape in respective planes, converging with each other from the bottom upwards.

5. The trolley-mounted motor-driven unit according to claim 4, **characterised in that** the frame (5) comprises an axle (12) for at least two wheels (3) the axle being integral with and transversal to the lower arms (10) of the U-shaped structure, the free end of the lower arms (10) forming trolley (2) supporting means (13).

6. The trolley-mounted motor-driven unit according to claim 5, **characterised in that** the structure comprises handle means (26) for gripping and moving the unit (1), said handle means being integral with the lower arms (10).
